# EUROPÄISCHE PATENTSCHRIFT

(11) **EP 2 686 644 B1**
(45) Veröffentlichungstag und Bekanntmachung des Hinweises auf die Patenterteilung: **13.03.2019**
(21) Anmeldenummer: 12700661.7
(22) Anmeldetag: 16.01.2012
(51) Int. Cl.: G01F 1/684, G01F 15/14

(54) **VORRICHTUNG ZUR ERFASSUNG MINDESTENS EINER EIGENSCHAFT EINES FLUIDEN MEDIUMS**
APPARATUS FOR RECORDING AT LEAST ONE PROPERTY OF A FLUID MEDIUM
DISPOSITIF SERVANT À APPRÉHENDER AU MOINS UNE PROPRIÉTÉ D'UN MILIEU FLUIDE

(30) Priorität: 18.03.2011 DE 102011005768
(43) Veröffentlichungstag der Anmeldung: 22.01.2014
(73) Patentinhaber: Robert Bosch GmbH, 70442 Stuttgart (DE)
(72) Erfinder: MAIS, Torsten, 71636 Ludwigsburg (DE); WAGNER, Ulrich, 70197 Stuttgart (DE)
(86) Internationale Anmeldenummer: PCT/EP2012/050561
(87) Internationale Veröffentlichungsnummer: WO 2012/126643

(56) Entgegenhaltungen:
- EP-A2- 1 291 622
- EP-A2- 1 855 090
- DE-A1- 10 347 912

## Beschreibung

### Stand der Technik

Die Erfindung geht aus von bekannten Vorrichtungen zur Erfassung wenigstens einer Eigenschaft eines fluiden Mediums, insbesondere eines in einer Hauptströmungsrichtung durch ein Strömungsrohr strömenden fluiden Mediums. Bei dem fluiden Medium kann es sich grundsätzlich um Gase und/oder Flüssigkeiten handeln, insbesondere um Luft, beispielsweise Ansaugluft in einem Ansaugtrakt einer Brennkraftmaschine eines Kraftfahrzeugs. Auch andere Einsatzgebiete sind jedoch denkbar. Bei der mindestens einen zu bestimmenden Eigenschaft kann es sich grundsätzlich um einen beliebigen physikalischen und/oder chemischen Parameter des fluiden Mediums handeln. Insbesondere kann es sich bei der Eigenschaft um eine Strömungseigenschaft handeln, beispielsweise eine Strömungsgeschwindigkeit und/oder einen Massenstrom und/oder einen Volumenstrom.

Die Erfindung wird im Folgenden, ohne Beschränkung weiterer möglicher Ausgestaltungen, insbesondere beschrieben unter Bezugnahme auf eine Luftmassenmessung, beispielsweise im Ansaugtrakt einer Brennkraftmaschine. Aus dem Stand der Technik sind zahlreiche Luftmassenmesser bekannt, beispielsweise aus Robert Bosch GmbH: Sensoren im Kraftfahrzeug, Ausgabe 2007, S. 140-142. Weitere Beispiele derartiger Luftmassenmesser sind aus DE 10 2008 042 164 A1, aus DE 10 2007 024 865 A1 oder aus DE 10 2008 042 807 bekannt. Insbesondere kann es sich bei diesen Vorrichtungen um so genannte Heißfilmluftmassenmesser handeln, welche in der Regel als Steckfühler ausgestaltet sind und welche mindestens einen Kanal umfassen, durch welchen ein Teil des strömenden fluiden Mediums geleitet wird. Beispielsweise kann der Steckfühler in ein Strömungsrohr eingebracht werden, und ein Teil des strömenden fluiden Mediums wird durch einen Kanal des Steckfühlers geleitet. In dem Kanal ist üblicherweise ein Sensorelement, beispielsweise ein Heißfilmluftmassenmesserchip, angeordnet, welcher mindestens ein Heizelement und mindestens zwei stromaufwärts und stromabwärts des Heizelements angeordnete Temperaturfühler umfasst. Aus einer Asymmetrie der Temperaturverteilung kann auf einen Massenstrom des fluiden Mediums, beispielsweise der Ansaugluft, geschlossen werden.

Bei vielen Heißfilmluftmassenmessern der beschriebenen Art mündet der Kanal in einer Auslassöffnung. Diese Auslassöffnung ist in vielen Fällen innerhalb eines abnehmbaren Deckels eines Gehäuses des Steckfühlers ausgebildet, beispielsweise auf einer Seitenwand des Steckfühlers und/oder auf einer Stirnfläche des Steckfühlers. Aufgrund von Montagetoleranzen und/oder Fertigungstoleranzen kann sich jedoch die Ausgestaltung und/oder die Positionierung des Deckels im Bereich dieser Auslassöffnung ändern, so dass die Geometrie der Auslassöffnung Variationen unterworfen sein kann. So können beispielsweise Überhänge des Deckels über die Öffnung entstehen, welche zu zusätzlichen Wirbeln und einem Druckabfall im Bereich der Auslassöffnung führen können. Diese wiederum können eine Strömung durch den Kanal beeinflussen und somit einen Einfluss auf die Messgenauigkeit des Heißfilmluftmassenmessers haben. Wünschenswert wäre daher eine Vorrichtung der genannten Art, welche einfach und kostengünstig mit hoher Präzision und mit verminderter Toleranz im Bereich der Auslassöffnung herstellbar ist.

### Offenbarung der Erfindung

Es wird dementsprechend eine Vorrichtung zur Erfassung mindestens einer Eigenschaft eines fluiden Mediums, insbesondere eines mit einer Hauptströmungsrichtung durch ein Strömungsrohr strömenden fluiden Mediums, vorgeschlagen, welche die oben genannten Nachteile bekannter Vorrichtungen der genannten Art zumindest teilweise vermeidet. Die Vorrichtung kann grundsätzlich analog zu den oben beschriebenen Vorrichtungen ausgestaltet sein, so dass es sich beispielsweise bei dem fluiden Medium um ein oder mehrere Gase und/oder Flüssigkeiten, insbesondere um Luft, beispielsweise eine Ansaugluftmasse einer Brennkraftmaschine, handeln kann. Bei den qualitativ und/oder quantitativ erfassbaren Eigenschaften des strömenden fluiden Mediums kann es sich insbesondere um eine oder mehrere Strömungseigenschaften handeln, beispielsweise eine Geschwindigkeit, einen Volumenstrom und/oder einen Massenstrom. Insbesondere kann die Vorrichtung somit als Luftmassenmesser ausgestaltet sein, insbesondere als Heißfilmluftmassenmesser, vorzugsweise für den Einsatz im Ansaugtrakt einer Brennkraftmaschine. Auch andere Ausgestaltungen sind grundsätzlich möglich.

Die Vorrichtung kann insbesondere mindestens ein Sensorelement umfassen. Unter einem Sensorelement ist dabei ein Element zu verstehen, welches eingerichtet ist, um die mindestens eine nachzuweisende Eigenschaft qualitativ und/oder quantitativ zu erfassen und beispielsweise in geeignete Messsignale, insbesondere elektrische und/oder optische Signale, umzuwandeln. Insbesondere kann dieses Sensorelement mindestens einen mit dem strömenden fluiden Medium in Kontakt bringbaren Sensorchip, beispielsweise einen Heißfilmluftmassenmesser-Sensorchip, umfassen. Beispielsweise kann das Sensorelement mindestens einen Sensorchip mit einer Messoberfläche umfassen, wobei auf der Messoberfläche beispielsweise mindestens ein Heizelement, beispielsweise mindestens ein Heizwiderstand, und mindestens zwei Temperaturfühler, beispielsweise mindestens zwei Temperaturmesswiderstände, angeordnet sein können. Wie oben dargestellt, kann beispielsweise aus einer Asymmetrie einer Temperaturverteilung und/oder der Messsignale der Temperaturfühler auf einen Massenstrom und/oder Volumenstrom und/oder auf eine Geschwindigkeit des fluiden Mediums geschlossen werden. Alternativ oder zusätzlich kann das Sensorelement jedoch auch eine oder mehrere andere Arten von Sensorelementen umfassen, beispielsweise Temperaturfühler und/oder Druckfühler und/oder andere Arten von Sensorelementen, welche grundsätzlich aus dem Stand der Technik bekannt sein können. Das Sensorelement kann insbesondere derart in der Vorrichtung aufgenommen sein, dass dieses direkt oder indirekt in Kontakt mit dem fluiden Medium steht.

Die Sensorvorrichtung weist mindestens ein in das fluide Medium einbringbares Sensorgehäuse auf. Das Sensorgehäuse weist mindestens einen von dem fluiden Medium durchströmbaren Kanal auf.

Wie unten noch näher erläutert wird, kann das Sensorgehäuse beispielsweise ganz oder teilweise als Steckfühler ausgestaltet sein und/oder Bestandteil eines Steckfühlers sein. So kann beispielsweise die Vorrichtung ein Strömungsrohr umfassen und/oder mit einem Strömungsrohr zusammenwirken, welches von dem fluiden Medium durchströmbar ist und in welches der Steckfühler hineinragen kann, so dass der Steckfühler in den Strömungsquerschnitt des Strömungsrohrs hineinragt. In dem Steckfühler kann beispielsweise, wie bei bekannten Heißfilmluftmassenmessern, der mindestens eine Kanal aufgenommen sein, durch welchen ein Teil des fluiden Mediums strömen kann. Beispielsweise kann der Steckfühler eine Einlassöffnung umfassen, durch welche ein Teil des fluiden Mediums aus dem Strömungsrohr in den Kanal hineingeleitet wird, und mindestens eine Auslassöffnung, durch welche ein Ausströmen aus dem Kanal möglich ist. Der Kanal kann gerade oder auch verzweigt ausgestaltet sein und kann beispielsweise mindestens einen Hauptkanal umfassen, durch welchen ein Hauptteil des fluiden Mediums strömt, sowie optional mindestens einen Bypasskanal, durch welchen ein aus dem Hauptkanal abgezweigter Volumenanteil des fluiden Mediums strömen kann. Das Sensorelement kann in mindestens einem Kanal angeordnet sein, insbesondere in dem Bypasskanal, beispielsweise indem eine Messoberfläche des Sensorelements, beispielsweise des Sensorchips, von dem fluiden Medium überströmt wird. Diesbezüglich kann grundsätzlich auf den oben genannten Stand der Technik verwiesen werden.

Wie oben ausgeführt, weist das Sensorgehäuse also den mindestens einen von dem fluiden Medium durchströmbaren Kanal auf. Der Kanal weist mindestens eine Auslassöffnung auf, wobei das fluide Medium nach Durchströmen des Kanals durch die Auslassöffnung ausströmen kann, beispielsweise zurück in das Strömungsrohr. Das Sensorgehäuse weist seinerseits mindestens einen Gehäusekörper und mindestens einen Deckel auf. Beispielsweise kann in dem Gehäusekörper der Kanal oder zumindest ein Teil des Kanals ausgebildet sein, wohingegen der Deckel beispielsweise einen Innenraum des Gehäusekörpers und/oder den Kanal zu einem Außenraum außerhalb des Sensorgehäuses abschließen kann, beispielsweise gegenüber dem fluiden Medium außerhalb des Sensorgehäuses in dem Strömungsrohr. Die Auslassöffnung ist in dem Deckel angeordnet.

Zur Lösung der oben beschriebenen Problematik wird vorgeschlagen, dass der Gehäusekörper mindestens einen in die Auslassöffnung eingreifenden Kragenabschnitt aufweist. Der Kragenabschnitt bildet zumindest einen Teil eines Rands der Auslassöffnung. Der Gehäusekörper kann somit in den Deckel eingreifen und beispielsweise die Auslassöffnung zumindest abschnittsweise beranden. Auf diese Weise kann ein Deckel mit der Auslassöffnung vorgesehen sein, wobei jedoch der Rand der Auslassöffnung vollständig oder teilweise von dem Gehäusekörper und dessen Kragenabschnitt gebildet werden kann. Die oben beschriebene Problematik, dass aufgrund von Fertigungstoleranzen und/oder Montagetoleranzen Toleranzen in einer Gestaltung einer Geometrie der Auslassöffnung in dem Deckel auftreten, kann auf diese Weise vermieden oder zumindest reduziert werden, da nunmehr beispielsweise Toleranzen in der Ausgestaltung des Deckels und/oder in einer Montage des Deckels relativ zu dem Gehäusekörper sich nicht mehr oder lediglich unwesentlich auf die Gestaltung der Geometrie des Rands der Auslassöffnung auswirken, da der Rand der Auslassöffnung nunmehr zumindest teilweise von dem Kragenabschnitt des Gehäusekörpers gebildet werden kann.

Unter einem Gehäusekörper und einem Deckel sind dabei im Rahmen der vorliegenden Erfindung mindestens zwei Bauteile des Sensorgehäuses zu verstehen, welche zusammenwirken und welche beispielsweise in einem unmittelbaren Kontakt stehen können, vorzugsweise in einem formschlüssigen und/oder kraftschlüssigen Kontakt, wobei jedoch eine stoffschlüssige Verbindung möglich ist. Der Gehäusekörper und der Deckel können jeweils einteilig oder auch mehrteilig ausgestaltet sein. Unter einem Deckel ist dabei allgemein ein Bauteil des Sensorgehäuses zu verstehen, welches um die Auslassöffnung herum eine dem fluiden Medium außerhalb des Sensorgehäuses zuweisende Oberfläche bildet. Der Gehäusekörper ist hingegen ein Bauelement, welches im Bereich der Auslassöffnung auf der dieser Oberfläche gegenüberliegenden Seite des Sensorgehäuses angeordnet ist. Der mindestens eine Kanal kann beispielsweise ganz oder teilweise in dem Gehäusekörper und/oder ganz oder teilweise in dem Deckel angeordnet sein. Besonders bevorzugt ist es jedoch, wenn Gehäusekörper und Deckel zusammenwirken, um diesen mindestens einen Kanal zu bilden. So kann beispielsweise mindestens eine langgestreckte Vertiefung in dem Gehäusekörper und/oder in dem Deckel vorgesehen sein, welche, nach Zusammenfügen des Gehäusekörpers und des Deckels, zu einem Kanal ergänzt wird. Der Gehäusekörper und/oder der Deckel können beispielsweise ganz oder teilweise aus einem Kunststoffmaterial hergestellt sein, wobei jedoch, alternativ oder zusätzlich, auch die Verwendung anderer Materialien möglich ist, beispielsweise keramischer und/oder metallischer Materialien. Der Gehäusekörper und der Deckel können beispielsweise, wie oben ausgeführt, Bestandteil eines Steckfühlers sein.

Die Auslassöffnung kann grundsätzlich einen beliebigen Querschnitt aufweisen, beispielsweise einen runden, ovalen, polygonalen oder auch schlitzförmigen Querschnitt. Die Auslassöffnung kann vorzugsweise auf einer Seitenfläche des Steckfühlers angeordnet sein, welche derart in dem Strömungsrohr angeordnet ist, dass diese vorzugsweise im Wesentlichen parallel zu einer Hauptströmungsrichtung ausgerichtet ist, also mit einer Abweichung von vorzugsweise nicht mehr als 20°, insbesondere nicht mehr als 10° und besonders bevorzugt nicht mehr als 5° von einer parallelen Ausrichtung zur Hauptströmungsrichtung.

Der Kragenabschnitt kann vollständig den Rand der Auslassöffnung bilden oder auch lediglich einen Teil dieses Randes. Insbesondere kann dieser Kragenabschnitt auf einer stromabwärts gelegenen Seite der Auslassöffnung bezüglich einer Hauptströmungsrichtung des fluiden Mediums in dem Strömungsrohr angeordnet sein.

Weitere mögliche Ausgestaltungen betreffen den Kanal der Vorrichtung. Dieser Kanal kann einteilig oder auch mehrteilig ausgestaltet sein. In dem Kanal kann insbesondere mindestens ein Sensorelement zur Erfassung des mindestens einen Parameters aufgenommen sein. Bei diesem Sensorelement kann es sich insbesondere um ein Heißfilmluftmassenmesser-Sensorelement handeln, beispielsweise einen Heißfilmluftmassenmesser-Sensorchip gemäß der obigen Beschreibung. Auch andere Ausgestaltungen sind jedoch alternativ oder zusätzlich möglich.

Der Kanal kann insbesondere mindestens einen Hauptkanal und mindestens einen von dem Hauptkanal abzweigenden Bypasskanal aufweisen. Das Sensorelement kann insbesondere in dem optionalen mindestens einen Bypasskanal angeordnet sein. Beispielsweise kann sich der Hauptkanal von einer stirnseitigen, stromaufwärts gelegenen Eintrittsöffnung zu der Austrittsöffnung erstrecken. Der Bypasskanal kann von dem Hauptkanal abzweigen und in einer oder mehreren Bypasskanal-Auslassöffnungen münden, welche beispielsweise ebenfalls auf einer Seitenfläche des Steckfühlers angeordnet sein können und/oder auf einer Kopfseite, welche am weitesten in das strömende fluide Medium hineinragt. Auch andere Ausgestaltungen sind jedoch möglich.

Wie oben beschrieben, kann das Sensorgehäuse insbesondere zumindest teilweise als Steckfühler ausgestaltet sein, wobei der Steckfühler in ein Strömungsrohr des fluiden Mediums einbringbar sein kann. Dieses Einbringen des Steckfühlers in das Strömungsrohr kann im Rahmen einer festen Montage oder auch austauschbar erfolgen. Das Strömungsrohr selbst kann ebenfalls Bestandteil der vorgeschlagenen Vorrichtung sein, kann jedoch auch getrennt von der Vorrichtung ausgebildet sein. Insbesondere kann es sich bei dem Strömungsrohr um ein Ansaugrohr für eine Ansaugluftmasse einer Brennkraftmaschine handeln.

Der Deckel kann insbesondere, wie oben beschrieben, eine dem fluiden Medium zuweisende Außenseite aufweisen. Diese Außenseite kann beispielsweise dem fluiden Medium außerhalb des Sensorgehäuses, insbesondere in dem Strömungsrohr, zuweisen und kann beispielsweise von dem fluiden Medium in dem Strömungsrohr umströmt oder umspült werden. Der Kanal, beispielsweise der Hauptkanal, kann an der Auslassöffnung eine schräg zu der Außenseite verlaufende Rampe aufweisen. Beispielsweise kann diese Rampe derart ausgestaltet sein, dass das aus der Auslassöffnung ausströmende fluide Medium in einem spitzen Winkel in das außerhalb des Sensorgehäuses mit der Hauptströmungsrichtung strömende fluide Medium mündet. Der Rand der Auslassöffnung kann insbesondere mindestens einen Teil dieser Rampe bilden. Insbesondere kann die Rampe unter einem Winkel von 10° bis 80°, vorzugsweise unter einem Winkel von 20° bis 60° und besonders bevorzugt unter einem Winkel von 30° bis 45° in der Außenseite münden. Dieselben bevorzugten Winkel können bezüglich der Rampe und der Hauptströmungsrichtung des fluiden Mediums außerhalb des Sensorgehäuses gelten.

Die Rampe kann eben oder auch gekrümmt ausgebildet sein. Die Rampe kann in einer ersten Variante vollständig durch den Gehäusekörper gebildet sein. In diesem Fall kann beispielsweise der Kragenabschnitt vollständig durch die Auslassöffnung durchgeführt sein, so dass der Gehäusekörper mit dem mindestens einen Kragenabschnitt vollständig diese Rampe bildet.

Alternativ kann der Gehäusekörper jedoch auch für die Bildung der genannten Rampe mit dem Deckel zusammenwirken. So kann beispielsweise der Kragenabschnitt einen ersten Teil der Rampe bilden, welcher dann in einen zweiten, durch den Deckel gebildeten Teil der Rampe übergeht. Dieser Übergang erfolgt vorzugsweise spaltfrei, beispielsweise mit einem Spalt von nicht mehr als 0,5 mm, insbesondere von nicht mehr als 0,3 mm oder sogar nicht mehr als 0,2 mm. Weiterhin kann bevorzugt am Übergang zwischen dem Gehäusekörper und dem Deckel im Bereich der Rampe eine stufenfreie Fügung vorgesehen sein, beispielsweise indem Stufen mit einer Höhe von nicht mehr als 0,5 mm, vorzugsweise von nicht mehr als 0,3 mm oder sogar nicht mehr als 0,2 mm vorgesehen sind.

Wie oben beschrieben, kann der Kragenabschnitt die Auslassöffnung vollständig oder teilweise beranden. Insbesondere kann der Kragenabschnitt zumindest auf einem bezüglich auf einer Hauptströmungsrichtung des fluiden Mediums außerhalb des Kanals abströmseitig angeordneten Teil des Randes der Auslassöffnung angeordnet sein.

Wie oben beschrieben, kann der Kragenabschnitt, alleine oder in Zusammenwirkung mit dem Deckel, insbesondere mindestens eine Rampe bilden. Insbesondere kann der in die Auslassöffnung eingreifende Kragenabschnitt in einer Schnittebene senkrecht zu einer Außenseite des Deckels, beispielsweise in einer Schnittebene parallel zur Hauptströmungsrichtung des fluiden Mediums, einen keilförmigen Querschnitt aufweisen.

Wie oben ausgeführt, greift der Kragenabschnitt in die Auslassöffnung in dem Deckel ein. Dieser Eingriff kann teilweise oder vollständig erfolgen, so dass der Kragenabschnitt den Deckel teilweise oder vollständig durchdringen kann. Beispielsweise kann der Deckel an der Auslassöffnung eine Dicke d aufweisen, und der Kragenabschnitt kann um mindestens 20 % dieser Dicke, vorzugsweise um mindestens 40 % dieser Dicke, insbesondere um mindestens 80 % dieser Dicke und besonders bevorzugt um mindestens 90 % oder sogar um 100 % der Dicke in den Deckel eingreifen. Alternativ kann der Kragenabschnitt sogar durch den Deckel hindurchgreifen und beispielsweise auf der Außenseite über den Deckel hinausragen und dort beispielsweise eine Wulst bilden oder die Öffnung überkragen. Verschiedene Ausgestaltungen sind möglich.

Die oben beschriebene Vorrichtung weist gegenüber bekannten Vorrichtungen der genannten Art zahlreiche Vorteile auf. Insbesondere lassen sich, wie oben beschrieben, Herstellungs- und Montagetoleranzen mittels des vorgeschlagenen Kragenabschnitts ausgleichen. Hierdurch lassen sich Herstellungs- und Montageanforderungen und damit auch Herstellungskosten senken. Insgesamt lässt sich hierdurch eine gegenüber Montage- und Fertigungstoleranzen robuste und dennoch kostengünstige Konstruktion erzielen. Gleichzeitig lässt sich durch die erfindungsgemäße Ausgestaltung die Messgenauigkeit der Vorrichtung verbessern. So lässt sich insbesondere im Bereich der Auslassöffnung ein Pfad für das fluide Medium, beispielsweise ein Luftpfad, ohne Sprünge realisieren. Gleichzeitig lassen sich Toleranzen des Übergangs zwischen dem Gehäusekörper und dem Deckel aufweiten, was, bei gleichzeitiger Steigerung der Messgenauigkeit, zu einer günstigeren Werkzeugherstellung führen kann.

### Kurze Beschreibung der Zeichnungen

Weitere Einzelheiten und Merkmale der Erfindung ergeben sich aus der nachfolgenden Beschreibung bevorzugter Ausführungsbeispiele.

Es zeigen:
- Figur 1: eine Explosionsdarstellung eines bekannten Heißfilmluftmassenmessers;
- Figur 2: eine Schnittdarstellung eines kritischen Übergangs an einer Auslassöffnung;
- Figuren 3A bis 3C: Detaildarstellungen des kritischen Übergangs gemäß Figur 2 bei unterschiedlichen Montagen;
- Figuren 4A bis 4C: verschiedene Ausführungsbeispiele einer erfindungsgemäßen Vorrichtung in einer zu den Figuren 3A bis 3C analogen Darstellung; und
- Figur 5: ein weiteres Ausführungsbeispiel einer erfindungsgemäßen Vorrichtung in einer zu Figur 2 analogen Darstellung.

### Ausführungsformen der Erfindung

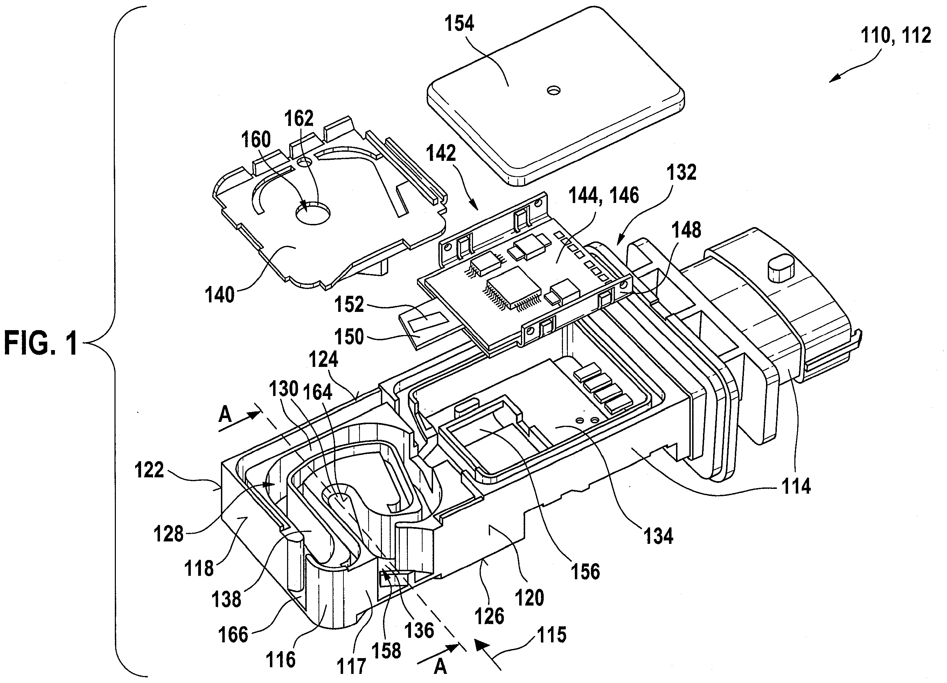

In Figur 1 ist ein dem Stand der Technik entsprechendes Ausführungsbeispiel einer Vorrichtung 110 zur Erfassung mindestens einer Eigenschaft eines fluiden Mediums dargestellt. Insbesondere kann es sich bei dem fluiden Medium um ein strömendes fluides Medium handeln, und bei der Eigenschaft um eine Strömungseigenschaft des fluiden Mediums. Die Darstellung in Figur 1 zeigt eine Explosionsdarstellung der Vorrichtung 110. Die Vorrichtung 110 ist in diesem Ausführungsbeispiel als Heißfilmluftmassenmesser 112 ausgestaltet und umfasst einen Steckfühler 114, welcher in eine Strömung des fluiden Mediums, beispielsweise eine Ansaugluftmasse, einbringbar ist, beispielsweise reversibel in ein Ansaugrohr oder permanent installiert. In Figur 1 ist eine Hauptströmungsrichtung des fluiden Mediums mit der Bezugsziffer 115 bezeichnet. Der Heißfilmluftmassenmesser 112 entspricht einem kommerziell erhältlichen Luftmassensensor vom Typ HFM7 der Robert Bosch GmbH, Deutschland.

Der Steckfühler 114 umfasst ein Sensorgehäuse 116, mit einer am weitesten in das fluide Medium hineinragenden Kopfseite 118, einer der Hauptströmungsrichtung 115 entgegenweisenden Stirnseite 120, einer der Hauptströmungsrichtung 115 abgewandten Rückseite 122 und zwei Seitenflächen 124, 126, welche im Folgenden auch als Außenseiten bezeichnet werden und wobei in Figur 1 die Seitenfläche 124 erkennbar ist. Das Sensorgehäuse 116 weist einen Gehäusekörper 117 auf. In diesem Gehäusekörper 117 sind ein Kanalbereich 128 mit mindestens einem von dem fluiden Medium durchströmbaren Kanal 130 und ein Elektronikbereich 132 mit einem in das Sensorgehäuse 116 eingelassenen Elektronikraum 134 aufgenommen. Der Kanal 130 weist seinerseits einen Hauptkanal 136 und einen Bypasskanal 138 auf, welche vollständig oder teilweise in dem Gehäusekörper 117 ausgebildet sind. Der Kanalbereich 128 ist durch einen Deckel 140, beispielsweise einen Kanalraumdeckel, auf der Seite 124 verschließbar. Der Elektronikraum 134 ist in diesem Ausführungsbeispiel exemplarisch als rechteckige Vertiefung in der ersten Seite des Gehäusekörpers 117 ausgestaltet. In dem Elektronikraum 134 ist ein Elektronikmodul 142 aufgenommen, welches beispielsweise einen Schaltungsträger 144 mit einer Ansteuer- und/oder Auswerteschaltung 146 umfassen kann. Der Schaltungsträger 144 kann beispielsweise auf einem Bodenblech 148 angeordnet sein. Weiterhin umfasst das Elektronikmodul 142 vorzugsweise einen Sensorträger 150 in Form eines an das Bodenblech 148 angespritzten Flügels, welcher in den Bypasskanal 138 hineinragen kann. In den Sensorträger 150 ist ein Sensorelement 152 in Form eines Heißfilmluftmassenmesserchips eingelassen. Der Elektronikraum 134 ist auf der Seite 124 durch einen Elektronikraumdeckel 154 verschließbar. Weiterhin kann das Sensorgehäuse 116 optional auf der zweiten Seite 126 eine Kühlöffnung 156 umfassen, die sich in den Elektronikraum 134 hinein erstreckt.

Wie in Figur 1 erkennbar, weist der Kanal 130 bei dem dargestellten Ausführungsbeispiel den Hauptkanal 136 und den Bypasskanal 138 auf. Der Hauptkanal erstreckt sich beispielsweise von einer Einlassöffnung 158, welche in der Stirnseite 120 aufgenommen ist, zu einer Auslassöffnung 160. Diese Auslassöffnung 160 ist in dem Deckel 140 angeordnet, so dass ein Strömungsauslass aus dem Hauptkanal 136 in dem dargestellten Ausführungsbeispiel auf der Seitenfläche 124 erfolgt. Die Auslassöffnung 160 weist einen Rand 162 auf, welcher in dem dargestellten Ausführungsbeispiel gemäß dem Stand der Technik vollständig von dem Deckel 140 gebildet wird. In dem Gehäusekörper 117 kann im Bereich der Auslassöffnung 160 eine Rampe 164 vorgesehen sein, welche das durch die Einlassöffnung 158 in den Hauptkanal 136 einströmende fluide Medium zu der Auslassöffnung 160 führt. Die Rampe 164 kann sich in dem Rand 162 der Auslassöffnung 160 fortsetzen, beispielsweise indem dieser Rand 162 abgeschrägt ausgestaltet ist.

Von der in Figur 1 gezeigten Vorrichtung 110 sind zahlreiche verschiedene Ausführungen bekannt. So mündet beispielsweise bei dem Ausführungsbeispiel gemäß Figur 1 der Bypasskanal 138 in einem Bypassauslass 166 auf der Kopfseite 118. Auch Ausgestaltungen, bei welchen der Bypassauslass 166 auf einer der beiden Seitenflächen 124, 126 angeordnet ist, sind möglich. Weiterhin ist die Auslassöffnung 160 in dem dargestellten Ausführungsbeispiel gemäß Figur 1 im Wesentlichen rund ausgestaltet. Auch andere Formen sind jedoch grundsätzlich bekannt. So kann die Auslassöffnung 160 beispielsweise loch- oder schlitzförmig ausgebildet sein. Weiterhin ist darauf hinzuweisen, dass die Rollen von Deckel 140 und Gehäusekörper 117 grundsätzlich auch vertauscht sein können. Als Deckel wird im Folgenden allgemein dasjenige Bauteil bezeichnet, welches die Außenoberfläche im Bereich der Auslassöffnung 160 bildet, also die dem fluiden Medium außerhalb des Steckfühlers 114 zuweisende Seite.

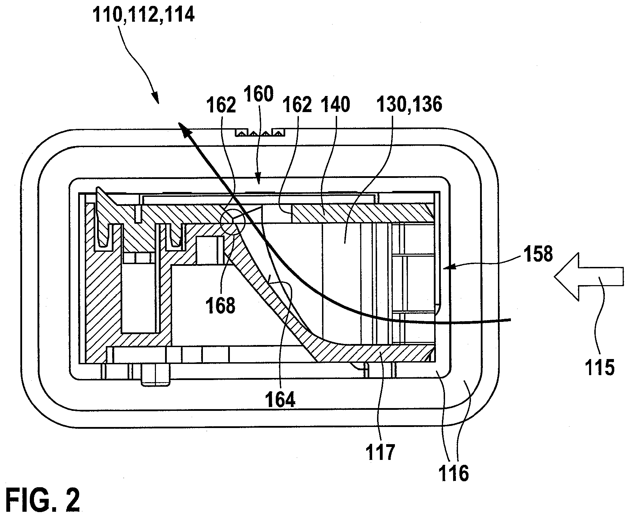

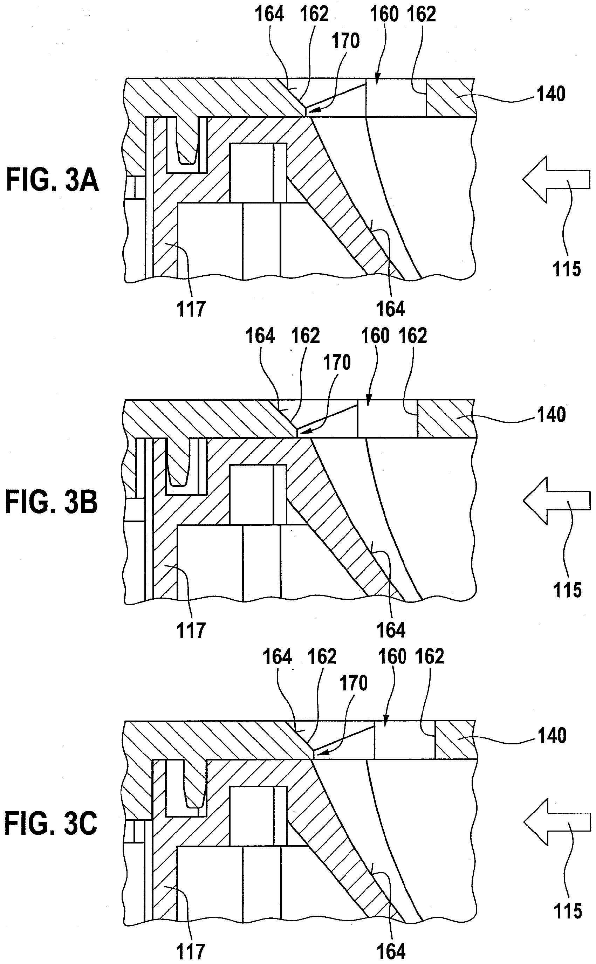

Bei dem derzeitigen Stand der Technik sind die Geometrien der Auslassöffnung 160 theoretisch ideal aufeinander abgestimmt, d.h. bei idealer Montage erfolgt im Bereich der Auslassöffnung 160 am Übergang zwischen dem Gehäusekörper 117 und dem Deckel 140 vorzugsweise kein Überhang, kein Versatz und folglich auch keine Stufe auf dem Pfad der Luftströmung. In Figur 2 ist ein Schnitt entlang der Schnittlinie A-A in Figur 1 gezeigt, mit Blickrichtung auf die Kopfseite 118. Aus dieser Darstellung ist erkennbar, dass sich im Bereich eines Übergangs zwischen dem Gehäusekörper 117 und dem Deckel 140 ein kritischer Bereich ergibt, welcher mit der Bezugsziffer 168 bezeichnet ist. Dieser kritische Bereich ist in den Figuren 3A bis 3C für verschiedene Fälle in vergrößerter Darstellung gezeigt. Hierbei ist erkennbar, dass sich bei den aus dem Stand der Technik bekannten Konstruktionen die Rampe 164 im Deckel 140 fortsetzen kann. Am Übergang zwischen dem Gehäusekörper 117 und dem Deckel 140 kann im Bereich der Rampe 164 eine Fase 170 vorgesehen sein.

Bei idealer Montage kann der in Figur 3A gezeigte Versatz minimiert werden. Schmutz, Wasser und Staub werden aus der Auslassöffnung 160 in der Regel problemlos ausgetragen. Die Fase 170 an der Kante des Deckels kann entfallen, wird aber üblicherweise für bessere Fertigbarkeit beim Spritzgießen vorgesehen.

Eine ideale Montage ist aber in vielen Fällen in einer Großserienherstellung nicht oder nur mit erheblichem Aufwand darstellbar. Hauptgründe hierfür sind, dass der Deckel 140 und/oder der Gehäusekörper 117 nicht vollständig den konstruierten Maßen entsprechen. Weiterhin streut in der Regel eine Positionierung des Deckels 140 zum Gehäusekörper 117 um einen Mittelwert. Dadurch treten in der Praxis auch Fälle auf, welche in den Figuren 3B und 3C gezeigt sind. So zeigt Figur 3B einen Fall, bei welchem der Übergang zurückgesetzt ist, wobei der Deckel 140 zur Abströmseite hin, also in Figur 3B nach links, zurückgesetzt ist, mitsamt der optionalen Fase 170. Die Rampe 164 weist daher im Bereich dieses Übergangs eine größere Stufe auf als bei einer idealen Montage. In Figur 3C ist hingegen ein Fall dargestellt, bei welchem der Deckel 140 zur Anströmseite hin verschoben ist, so dass sich im Bereich der Rampe ein Überhang des Deckels 140 bildet. Die Rampe 164 ist in diesem Bereich unterbrochen. Diese Variante ist besonders nachteilig für eine Strömungsführung, da bei dieser zusätzliche Wirbel und ein Druckabfall erzeugt werden können, was einen Einfluss auf die Messgenauigkeit haben kann.

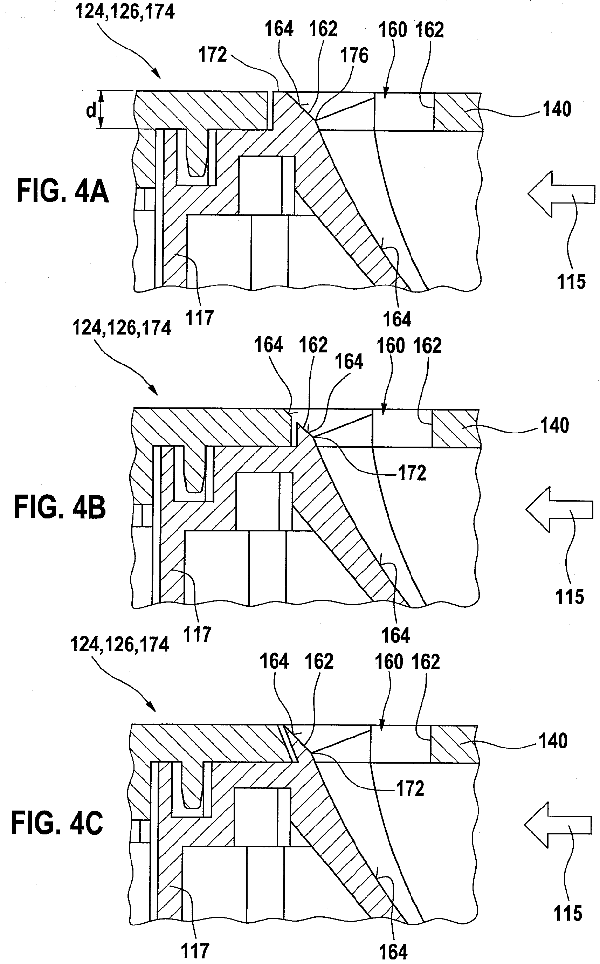

In den Figuren 4A bis 4C sind hingegen erfindungsgemäße Ausgestaltungen der Auslassöffnung 160 in einer zu den Figuren 3A bis 3C analogen vergrößerten Darstellung gezeigt. Diese Ausführungsbeispiele gemäß den Figuren 4A bis 4C können problemlos auch beispielsweise in einer Vorrichtung 110 gemäß Figur 1 integriert werden. Allen Ausführungsbeispielen ist gemeinsam, dass der Gehäusekörper 117 mindestens einen in die Auslassöffnung 116 eingreifenden Kragenabschnitt 172 aufweist. Dieser Kragenabschnitt 172 kann vollständig oder teilweise in die Auslassöffnung 116 eingreifen oder sogar durch diese hindurchgreifen. Der Kragenabschnitt 172 kann insbesondere, wie in den Figuren 4A bis 4C gezeigt, abströmseitig angeordnet sein und abströmseitig den Rand 162 der Auslassöffnung 160 oder einen Teil desselben bilden.

Insbesondere kann mittels des Kragenabschnitts 172 die Rampe 164 derart verlängert werden, dass diese durch den Deckel 140 stößt. Somit kann bei der Montage kein Überhang, wie beispielsweise in Figur 3C gezeigt, entstehen.

In Figur 4A ist eine bevorzugte Ausführungsform gezeigt, bei welcher der Kragenabschnitt 162 sich bis zu einer Außenseite 174, beispielsweise der Seitenfläche 124 oder 126, erstreckt, beispielsweise über eine volle Dicke d des Deckels 140. Die Rampe 164 kann dabei mit einer kontinuierlichen Steigung verlaufen oder auch, wie in den Figuren 4A bis 4C gezeigt, im Bereich der Auslassöffnung 116 einen oder mehrere Knicks 176 aufweisen, d.h. eine diskontinuierliche Steigung in Bezug auf die Hauptströmungsrichtung 115.

Als Alternative zu der in Figur 4A gezeigten Ausführungsform ist in Figur 4B eine Variante gezeigt, bei welcher sich der Kragenabschnitt 172 nicht vollständig durch die Auslassöffnung 160 hindurch erstreckt, sondern bei welcher ein Teil des Rands 162 und ein Teil der Rampe 164 noch von dem Deckel 140 gebildet werden. Sprünge im Luftpfad sind bei dieser Ausgestaltung zwar möglich, allerdings nur in der strömungstechnisch harmloseren Variante ohne Überhang.

In Figur 4C ist schließlich ein Ausführungsbeispiel gezeigt, welches im Wesentlichen dem Ausführungsbeispiel gemäß Figur 4A entsprechen kann, bei welchem jedoch der Kragenabschnitt 172 an seinem am weitesten in die Öffnung 160 hineinragenden Ende spitz verläuft. Diese Spitze kann beispielsweise mit der Außenseite 174 bündig abschließen oder auch gegenüber dieser zurückversetzt sein. Weiterhin kann auch der Deckel 140 im Bereich dieses Kragenabschnitts 172 schräg zur Außenseite 174 verlaufen und beispielsweise einer Kontur des Kragenabschnitts 172 angepasst sein.

Ein Vorteil der in den Figuren 4A bis 4C gezeigten Ausführungsbeispiele und der Grundidee der Erfindung allgemein besteht darin, dass die auf diese Weise herstellbare Vorrichtung robust gegenüber Montagetoleranzen zwischen dem Deckel 140 und dem Gehäusekörper 117 ist. Es lässt sich auf einfache Weise ein Luftpfad ohne Sprünge realisieren. Weiterhin können Toleranzen des Übergangs zwischen dem Deckel und dem Gehäusekörper 117 aufgeweitet werden, wodurch eine günstigere Werkzeugherstellung realisierbar ist. Bei der in Figur 4C gezeigten Variante lassen sich zudem Sprünge im Luftpfad trotz einer optionalen nur teilweisen Durchführung des Kragenabschnitts 172 durch die Auslassöffnung 160 verringern, indem ein Überlapp zwischen dem Deckel 140 in diesem Bereich und dem Kragenabschnitt 172 bei einer Blickrichtung senkrecht auf die Außenseite 174 realisiert wird. Diese Ausführungsvariante bedingt jedoch in der Regel, dass der Deckel 140 auf komplexere Weise nicht-senkrecht montiert werden sollte.

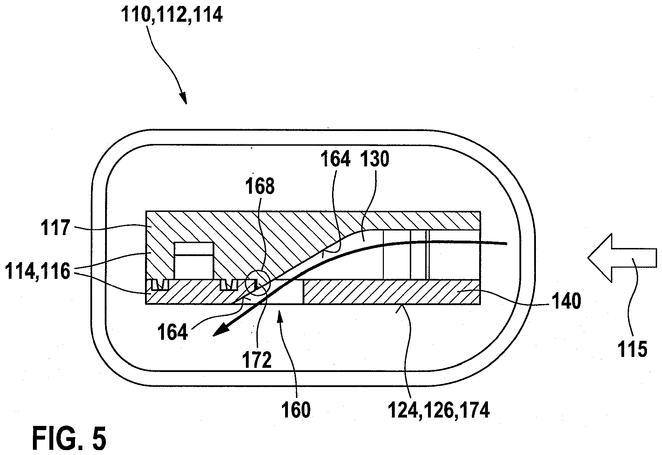

Wie oben ausgeführt, ist die Zuordnung der Rampe 164 und der Auslassöffnung 160 und die Bezeichnung des "Deckels" 140 und des "Gehäusekörpers" 117 willkürlich gewählt. Allgemein ist als Deckel 140 ein Gehäuseteil des Sensorgehäuses 116 zu bezeichnen, welcher die Außenseite 174 hin zu dem fluiden Medium im Bereich der Auslassöffnung 160 aufweist. Der Gehäusekörper 117 ist hingegen dasjenige Bauteil des Sensorgehäuses 116, welches den Kragenabschnitt 172 aufweist. In welchem dieser Bauteile die Rampe 164 angeordnet ist und in welchem die Auslassöffnung 160 angeordnet ist, ist hierdurch jedoch nicht festgelegt. So kann beispielsweise, im Gegensatz zu dem in den Figuren 4A bis 4C gezeigten Ausführungsbeispiel, die Rampe 164 grundsätzlich auch im Deckel 140 ausgebildet sein, und die Auslassöffnung 116 kann im Gehäusekörper 117 angeordnet sein. Ein derartiges Ausführungsbeispiel ist, in einer zu Figur 2 analogen Darstellung, in Figur 5 gezeigt. In diesem Fall ist die Auslassöffnung 160 in einem stationären Teil des Sensorgehäuses 116 ausgebildet, welcher damit gemäß der oben genannten Definition den Deckel 140 bildet, auch wenn dieser beispielsweise einstückig mit dem restlichen Steckfühler 114 ausgebildet ist. Dieser Deckel 140 ist in Figur 5 unten dargestellt. Die Kanalstruktur des Kanals 130 kann hingegen beispielsweise in einem auf diesen stationären Teil des Sensorgehäuses 116 aufgesetzten Gehäuseteil aufgenommen sein, welcher in dieser Ausgestaltung als Gehäusekörper 117 wirkt, auch wenn dieser in Form eines Deckels auf den stationären Teil aufgesetzt wird. Dementsprechend ist in dem Ausführungsbeispiel gemäß Figur 5 beispielsweise der Deckel 140 einstückig mit dem Steckfühler 114 ausgebildet, wohingegen der Gehäusekörper 117 beispielsweise von dem Steckfühler 114 abnehmbar ist.

Ansonsten kann das Ausführungsbeispiel gemäß Figur 5 beispielsweise einem oder mehreren der Ausführungsbeispiele in den Figuren 4A bis 4C entsprechen. Dargestellt ist ein Ausführungsbeispiel ähnlich dem Ausführungsbeispiel gemäß Figur 4B, bei welchem ein Kragenabschnitt 172 teilweise in die Auslassöffnung 160 hineinragt, so dass die Rampe 164 im Bereich der Auslassöffnung 160 teilweise von dem Gehäusekörper 117 und teilweise von dem Deckel 140 gebildet wird. Auch andere Ausgestaltungen sind jedoch grundsätzlich möglich. In jedem Fall kann beispielsweise die Rampe 164 durch die Auslassöffnung 160 geführt werden.

## Patentansprüche

1. Vorrichtung (110) zur Erfassung mindestens einer Eigenschaft eines fluiden Mediums, wobei die Vorrichtung (110) mindestens ein in das fluide Medium einbringbares Sensorgehäuse (116) aufweist, wobei das Sensorgehäuse (116) mindestens einen von dem fluiden Medium durchströmbaren Kanal (130) aufweist, wobei in dem Kanal (130) mindestens ein Sensorelement (152) zur Erfassung des Parameters aufgenommen ist, wobei der Kanal (130) eine in einer Stirnseite (120) des Sensorgehäuses (116) aufgenommene Einlassöffnung (158) und mindestens eine Auslassöffnung (160) aufweist, wobei das fluide Medium nach Durchströmen des Kanals (130) durch die Auslassöffnung (160) in das fluide Medium außerhalb des Sensorgehäuses (116) ausströmen kann, wobei das Sensorgehäuse (116) mindestens einen Gehäusekörper (117) und mindestens einen Deckel (140) aufweist, wobei die Auslassöffnung (160) in dem Deckel (140) angeordnet ist,
**dadurch gekennzeichnet, dass**
der Gehäusekörper (117) mindestens einen in die Auslassöffnung (160) eingreifenden Kragenabschnitt (172) aufweist, wobei der Kragenabschnitt (172) zumindest einen Teil eines Rands (162) der Auslassöffnung (160) bildet.

2. Vorrichtung (110) nach dem vorhergehenden Anspruch, wobei das Sensorelement ein Heißfilmluftmassenmesser-Sensorelement (152) ist.

3. Vorrichtung (110) nach dem vorhergehenden Anspruch, wobei der Kanal (130) mindestens einen Hauptkanal (136) und mindestens einen von dem Hauptkanal (136) abzweigenden Bypasskanal (138) aufweist, wobei das Sensorelement (152) in dem Bypasskanal (138) aufgenommen ist.

4. Vorrichtung (110) nach einem der vorhergehenden Ansprüche, wobei das Sensorgehäuse (116) zumindest teilweise als Steckfühler (114) ausgestaltet ist, wobei der Steckfühler (114) in ein Strömungsrohr des fluiden Mediums einbringbar ist.

5. Vorrichtung (110) nach einem der vorhergehenden Ansprüche, wobei der Deckel (140) eine dem fluiden Medium zuweisende Außenseite (174) aufweist, wobei der Kanal (130) an der Auslassöffnung (160) eine schräg zu der Außenseite (174) verlaufenden Rampe (164) aufweist, wobei der Rand (162) der Auslassöffnung (160) zumindest einen Teil der Rampe (164) bildet.

6. Vorrichtung (110) nach dem vorhergehenden Anspruch, wobei die Rampe (164) unter einem Winkel von 10° bis 80°, insbesondere unter einem Winkel von 30° bis 60° und besonders bevorzugt unter einem Winkel von 45° in der Außenseite (174) mündet.

7. Vorrichtung (110) nach einem der beiden vorhergehenden Ansprüche, wobei die Rampe (164) ausgewählt ist aus der Gruppe bestehend aus:
- einer vollständig durch den Gehäusekörper (117) gebildeten Rampe (164), und
- einer teilweise durch den Gehäusekörper (117) und teilweise durch den Deckel (140) gebildeten Rampe (164).

8. Vorrichtung (110) nach einem der vorhergehenden Ansprüche, wobei der Kragenabschnitt (172) zumindest auf einem bezüglich einer Hauptströmungsrichtung (115) des fluiden Mediums außerhalb des Kanals (130) abströmseitig angeordneten Teil des Rands (162) der Auslassöffnung (160) angeordnet ist.

9. Vorrichtung (110) nach einem der vorhergehenden Ansprüche, wobei der in die Auslassöffnung (160) eingreifende Kragenabschnitt (172) einen keilförmigen Querschnitt in einer Schnittebene senkrecht zu einer Außenseite (174) des Deckels aufweist.

10. Vorrichtung (110) nach einem der vorhergehenden Ansprüche, wobei der Deckel (140) an der Auslassöffnung (160) eine Dicke d aufweist, wobei der Kragenabschnitt (172) um mindestens 20% der Dicke in den Deckel (140) eingreift.

## Claims

1. Device (110) for detecting at least one property of a fluid medium, wherein the device (110) has at least one sensor housing (116) which is able to be introduced into the fluid medium, wherein the sensor housing (116) has at least one duct (130) through which the fluid medium is able to flow, wherein at least one sensor element (152) for detecting the parameter is accommodated in the duct (130), wherein the duct (130) has an inlet opening (158), accommodated in an end side (120) of the sensor housing (116), and at least one outlet opening (160), wherein, after flowing through the duct (130), the fluid medium can flow out into the fluid medium outside the sensor housing (116) through the outlet opening (160), wherein the sensor housing (116) has at least one housing body (117) and at least one cover (140), wherein the outlet opening (160) is arranged in the cover (140), **characterized in that**
the housing body (117) has at least one collar portion (172), which engages into the outlet opening (160), wherein the collar portion (172) forms at least a part of an edge (162) of the outlet opening (160).

2. Device (110) according to the preceding claim, wherein the sensor element is a hot film air mass sensor sensor element (152).

3. Device (110) according to the preceding claim, wherein the duct (130) has at least one main duct (136) and at least one bypass duct (138), which branches off from the main duct (136), wherein the sensor element (152) is accommodated in the bypass duct (138).

4. Device (110) according to one of the preceding claims, wherein the sensor housing (116) is designed at least partially as a plug-in sensor (114), wherein the plug-in sensor (114) is able to be introduced into a flow tube of the fluid medium.

5. Device (110) according to one of the preceding claims, wherein the cover (140) has an outer side (174) which faces the fluid medium, wherein the duct (130) has, at the outlet opening (160), a ramp (164) which runs obliquely with respect to the outer side (174), wherein the edge (162) of the outlet opening (160) forms at least a part of the ramp (164).

6. Device (110) according to the preceding claim, wherein the ramp (164) opens out in the outer side (174) at an angle of 10° to 80°, in particular at an angle of 30° to 60°, and particularly preferably at an angle of 45°.

7. Device (110) according to one of the two preceding claims, wherein the ramp (164) is selected from the group consisting of:
- a ramp (164) formed completely by the housing body (117), and
- a ramp (164) formed partially by the housing body (117) and partially by the cover (140).

8. Device (110) according to one of the preceding claims, wherein the collar portion (172) is arranged at least on a part of the edge (162) of the outlet opening (160), which part is arranged on the outflow side with respect to a main flow direction (115) of the fluid medium outside the duct (130).

9. Device (110) according to one of the preceding claims, wherein the collar portion (172), which engages into the outlet opening (160), has a wedge-shaped cross section in a section plane perpendicular to an outer side (174) of the cover.

10. Device (110) according to one of the preceding claims, wherein the cover (140) has a thickness d at the outlet opening (160), wherein the collar portion (172) engages into the cover (140) by at least 20% of the thickness.

## Revendications

1. Dispositif (110) pour détecter au moins une propriété d'un milieu fluide, le dispositif (110) présentant au moins un boîtier de capteur (116) pouvant être introduit dans le milieu fluide, le boîtier de capteur (116) présentant au moins un canal (130) pouvant être parcouru par le milieu fluide, au moins un élément de capteur (152) pour détecter le paramètre étant reçu dans le canal (130), le canal (130) présentant une ouverture d'entrée (158) réalisée dans un côté frontal (120) du boîtier de capteur (116) et au moins une ouverture de sortie (160), le milieu fluide, après avoir traversé le canal (130), pouvant s'écouler à travers l'ouverture de sortie (160) dans le milieu fluide à l'extérieur du boîtier de capteur (116), le boîtier de capteur (116) présentant au moins un corps de boîtier (117) et au moins un couvercle (140), l'ouverture de sortie (160) étant disposée dans le couvercle (140),
**caractérisé en ce que**
le corps de boîtier (117) présente au moins une portion de col (172) s'engageant dans l'ouverture de sortie (160), la portion de col (172) formant au moins une partie d'un bord (162) de l'ouverture de sortie (160).

2. Dispositif (110) selon la revendication précédente, dans lequel l'élément de capteur est un élément de capteur-débitmètre massique d'air à film chaud (152).

3. Dispositif (110) selon la revendication précédente, dans lequel le canal (130) présente au moins un canal principal (136) et au moins un canal de dérivation (138) partant du canal principal (136), l'élément de capteur (152) étant reçu dans le canal de dérivation (138).

4. Dispositif (110) selon l'une quelconque des revendications précédentes, dans lequel le boîtier de capteur (116) est configuré au moins en partie sous forme de sonde à piquer (114), la sonde à piquer (114) pouvant être introduite dans un tube d'écoulement du milieu fluide.

5. Dispositif (110) selon l'une quelconque des revendications précédentes, dans lequel le couvercle (140) présente un côté extérieur (174) tourné vers le milieu fluide, le canal (130) présentant au niveau de l'ouverture de sortie (160) une rampe (164) s'étendant obliquement par rapport au côté extérieur (174), le bord (162) de l'ouverture de sortie (160) formant au moins une partie de la rampe (164).

6. Dispositif (110) selon la revendication précédente, dans lequel la rampe (164) débouche dans le côté extérieur (174) suivant un angle de 10° à 80°, en particulier suivant un angle de 30° à 60° et particulièrement préférablement suivant un angle de 45°.

7. Dispositif (110) selon l'une quelconque des deux revendications précédentes, dans lequel la rampe (164) est choisie parmi le groupe constitué de :
- une rampe (164) formée complètement par le corps de boîtier (117), et
- une rampe (164) formée en partie par le corps de boîtier (117) et en partie par le couvercle (140).

8. Dispositif (110) selon l'une quelconque des revendications précédentes, dans lequel la portion de col (172) est disposée au moins sur une partie du bord (162) de l'ouverture de sortie (160) disposée du côté aval par rapport à une direction d'écoulement principal (115) du milieu fluide à l'extérieur du canal (130).

9. Dispositif (110) selon l'une quelconque des revendications précédentes, dans lequel la portion de col (172) s'engageant dans l'ouverture de sortie (160) présente une section transversale en forme de coin dans un plan de coupe perpendiculaire à un côté extérieur (174) du couvercle.

10. Dispositif (110) selon l'une quelconque des revendications précédentes, dans lequel le couvercle (140) présente au niveau de l'ouverture de sortie (160) une épaisseur d, la portion de col (172) s'engageant sur au moins 20 % de l'épaisseur dans le couvercle (140).
